Europäisches Patentamt

European Patent Office

Office européen des brevets

(19)

(11) Publication number: **0 220 954 B1**

# EUROPEAN PATENT SPECIFICATION

(12)

(45) Date of publication of patent specification: **18.12.91**   (51) Int. Cl.⁵: **F22B 1/18**

(21) Application number: **86308302.8**

(22) Date of filing: **24.10.86**

---

(54) Heat recovery system.

---

(30) Priority: **24.10.85 US 791175**

(43) Date of publication of application:
**06.05.87 Bulletin 87/19**

(45) Publication of the grant of the patent:
**18.12.91 Bulletin 91/51**

(84) Designated Contracting States:
**BE DE FR GB NL**

(56) References cited:
| | |
|---|---|
| **DE-C- 1 201 612** | **FR-A- 1 312 469** |
| **US-A- 3 919 839** | **US-A- 3 953 966** |
| **US-A- 3 965 675** | **US-A- 3 992 876** |
| **US-A- 4 160 805** | **US-A- 4 353 206** |
| **US-A- 4 354 347** | |

(73) Proprietor: **FOSTER WHEELER LIMITED**
**Foster Wheeler House Station Road**
**Reading Berkshire(GB)**

(72) Inventor: **Skinner, Geoffrey Frederick**
**Kimblewick Sutherland Avenue**
**Reading Berkshire(GB)**

(74) Representative: **Bowman, Paul Alan et al**
**LLOYD WISE, TREGEAR & CO. Norman**
**House 105-109 Strand**
**London WC2R OAE(GB)**

## Description

This invention relates to a heat recovery system. In particular it relates to a heat recovery system for gas turbine exhaust. In a specific embodiment it relates to a heat recovery system for gas turbine exhaust in a steam reforming plant.

Many process plants have been built incorporating steam systems operating at evaporation pressures of around 100 atmospheres. Most of these plants are used to produce ammonia synthesis gas by the steam reforming of natural gas.

The main reason for adopting this rather high steam generation pressure in these plants, relative to contemporary process plant practice of 40-60 atmospheres, is that about half the steam generated in these plants is needed at around 40 atmospheres for the steam reforming process, and a substantial amount of power can be produced by expansion of the steam from a higher pressure to this extraction pressure of around 40 atmospheres. The balance of the steam is used in condensing steam turbines, mainly driving compressors and pumps.

Many industries that need both electric power and process heat are installing so-called gas turbine cogeneration systems. Most of these consist of a gas-fired open cycle gas turbine generating electricity, with the turbine exhaust at about 538°C (1000°F) passing through a waste heat boiler to generate steam. The high thermal efficiency of these cogeneration plants, which can exceed 70%, allows them to produce electric power and process heat at low cost.

In these cogeneration plants, the gas turbine exhaust at about 538°C (1000°F) is first used to generate (and sometimes to superheat) process steam. The generation pressure is normally under 40 atmospheres. The exhaust gases are then used to generate further steam at low pressure. This is used for boiler feedwater heating and deaerating, and occasionally in a steam turbine. The cooled exhaust gas leaves the waste heat boiler at 121 to 149°C (250 to 300°F). A heat recovery system of this type is disclosed in US Patent No. 3,965,675.

Studies have been made on installing these gas turbine cogeneration systems on the large steam reforming plants referred to above, with integration of the gas turbine heat recovery with the existing 100 atmosphere steam systems. At first sight, this would improve the economics of operation, through generation of electric power for plant use at high thermal efficiency.

There is however a problem with this concept, arising from the evaporation temperatures of around 315°C (600°F) associated with 100 atmosphere steam generation. The proportion of the heat available in the gas turbine exhaust at 538°C (1000°F) that can be used for high pressure steam generation is thus quite limited. The lowest exhaust temperature at the outlet of the high pressure feedwater heater is around 260°C (500°F) and heat recovery beneath that temperature level to low pressure steam generation represents a low grade of heat recovery.

The instant invention is directed at processes and systems in which a higher proportion of the heat available in the gas turbine exhaust can be used for the production of 100 atmosphere steam or steam at similar high pressures. In a process of the invention the turbine exhaust is passed through a waste heat exchanger having a high pressure steam superheater and a high pressure feedwater heater, where the exhaust gas first contacts the high pressure steam superheater and then contacts the high pressure feedwater heater. According to the invention, the exhaust gases contact the feedwater heater directly after contact with the superheater, water exiting the feedwater heater is passed to a steam generator separate from the waste heat exchanger, and steam produced in the generator is passed to the superheater.

A heat recovery system according to the invention comprises a waste heat exchanger coupled to the exhaust of a gas turbine, the waste heat exchanger comprising a high pressure steam superheater and a high pressure feedwater heater, in which the superheater and the feedwater heater are disposed successively in the path of exhaust gases through the waste heat exchanger such that the exhaust gases contact the feedwater heater directly after contact with the superheater, wherein water exiting the feedwater heater is passed to a steam generator separate from the waste heat exchanger, and steam produced in the generator is passed to the superheater. This combination allows for increased production of high pressure steam in the complete steam system in comparison with prior art gas turbine heat recovery systems employing waste heat boilers.

Embodiments of the invention will now be described with reference to the accompanying drawings wherein:

Figure 1 shows a schematic view of an example of the instant invention's heat recovery system.

Figure 2 shows a schematic view of another example of the instant invention's heat recovery system in a steam reforming plant.

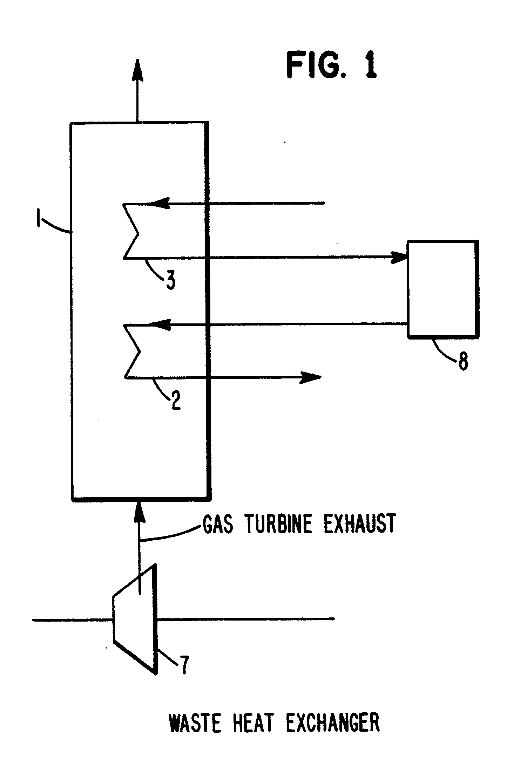

In the embodiment of the invention shown in Figure 1, gas turbine exhaust from gas turbine 7, which is at a temperature ranging from about 482 to 649°C (900 to 1200°F), but preferably around 538°C (1000°F), enters into a waste heat exchanger 1. There it contacts a high pressure steam superheater 2 through which is passed saturated steam from a steam generator 8. The steam is at elevated pressures ranging from about 90 to 150 atmospheres but preferably around 100 atmospheres and a temperature generally around about 260 to 343°C (550 to 650°F). Although the steam flow rate can be any suitable flow rate, generally the flow rate will range from about 22,680 to 68,000 Kg/hr (50,000 to 150,000 lb/hr). The steam generator can be any type of evaporator system, such as a stream drum in a reformer unit. This steam is superheated in a high pressure steam superheater 2, with the exhaust of the gas turbine, to steam at a temperature of around 427 to 538°C (810 to 1000°F) depending upon the temperature of the gas turbine exhaust.

The gas turbine exhaust then contacts high pressure feedwater heater 3 in which water is heated from a temperature ranging from about 93 to 260°C (200 to 500°F) to a temperature ranging from about 204 to 315°C (400 to 600°F). The high pressure feedwater heater is maintained at a pressure ranging from about 90 to about 150 atmospheres. Any suitable flow rate can be used with this heater, but generally the flow rate ranges from about 181,500 to 272,000 Kg/hr (400,000 to 600,000 lb/hr).

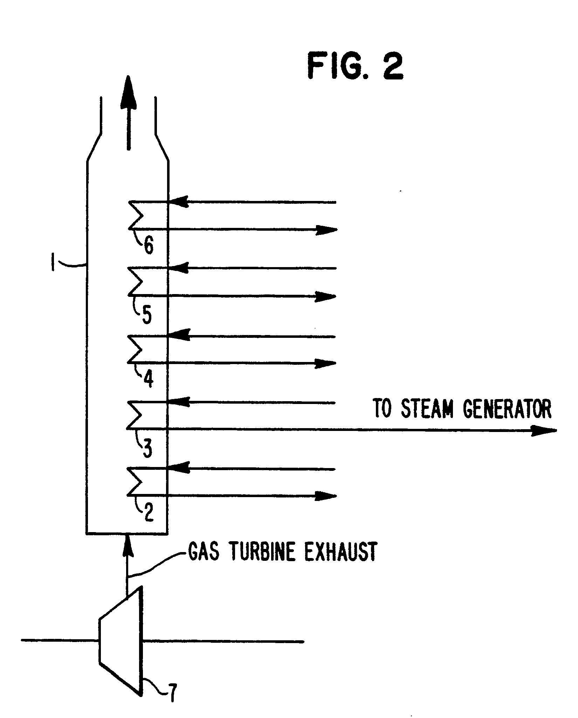

The gas turbine exhaust, as shown in Figure 2, can then be contacted with exchangers such as a feed gas heater 4, a fuel gas heater 5 and a low pressure feedwater heater 6. The gas turbine exhaust can also contact a second high pressure feedwater heater, a steam/deaerated water heater, or any other type of exchanger. The gas turbine exhaust then exits the waste heat exchanger at a temperature ranging from about 121 to 232°C (250 to 450°F).

The use of the high pressure superheater 2 replaces the combination of superheater and evaporator, in series on the steam side, that is usually used in waste heat boilers. This eliminates the need for extra high pressure steam drums and circulating pumps, and also affords improved control over the temperature of the overall plant superheated steam supply to the turbines.

Additionally, the high pressure boiler feedwater that is heated in the high pressure feedwater heater 3 with the gas turbine exhaust is then evaporated in a separate evaporator 8, outside the subject waste heat exchanger. The saturated steam thus produced is then heated in high pressure steam superheater 2 to form superheated steam. This feedwater heater 3, replaces the low pressure steam generation system that is normally used in prior waste heat boilers and contributes directly to the amount of high pressure steam produced elsewhere in the plant. This was not the case with the low pressure steam generation system.

THEORETICAL EXAMPLE

This example of the invention is shown in Figure 2.

Gas turbine exhaust enters a multi-service heat exchanger provided with five heat exchange surfaces, numbered from 2 to 6, which recover heat for use in an adjacent ammonia plant. The cooled exhaust gas is then discharged to the atmosphere.

At the base of the exchanger 259,190 Kg/hr (571,417 lb/hr) of gas turbine exhaust enters the exchanger at a temperature of 530°C (986°F). The exhaust first passes over high pressure steam superheater, in which 45,360 Kg/hr (100,000 lb/hr) of $10.687 \times 10^3$ N/m$^2$ gauge (1550 p.s.i.g.) saturated steam is heated from 317 to 460°C (603 to 860°F). The heat removed is 5.97 mm Kcal/hr (23.7 mm BTU/hr).

The exhaust, which is now at a temperature of 447°C (836°F) next passes over high pressure feedwater heater 3 in which 223,494 Kg/hr (492,720 lb/hr) of boiler feed water at $13.79 \times 10^6$ N/m$^2$ gauge (2,000 p.s.i.g.) and 220°C (427°F) is heated to 273°C (523°F). The heat removed is 13.48 mm Kcal/hr (53.5 mm BTU/hr).

The exhaust now at a temperature of 248°C (479°F), passes over feed gas heater 4, in which 1153 Kg mol/hr (2543 lb mol/hr) of natural gas at $4.136 \times 10^6$ N/m$^2$ gauge (600 p.s.i.g.) and 12.77°C (55°F) is heated to 215°C (420°F). The heat removed is 2.13 mm Kcal/hr (8.9 mm BTU/hr).

The exhaust at a temperature of 214°C (418°F) passes over fuel gas heater 5, in which 761 Kg mol/hr (1678 lb mol/hr) of natural gas at $2.07 \times 10^6$ N/m$^2$ gauge (300 p.s.i.g.) and 12.77°C (55°F) is heated to 182°C (360°F). The heat removed is 1.2 mm Kcal/hr (4.8 mm BTU/hr).

Finally, the exhaust at a temperature of 196°C (385°F) passes over low pressure feedwater heater 6, in which 76.203 Kg/hr (168,000 lb/hr) of boiler feedwater at $0.827 \times 10^6$ N/m$^2$ gauge (120 p.s.i.g.) and 116°C (240°F) is heated to 149°C (300°F). The heat removed is 2.6 mm Kcal/hr (10.3 mm BTU/hr) and the exhaust gas is discharged to the atmosphere at 157°C (314°F).

The total of the heat recovered in the five heat exchange surfaces is thus 25.5 mm Kcal/hr (101.2 mm BTU/hr).

It is to be understood that the heat exchange surfaces described above can be interleaved if desired, so as to achieve a more economical use of constructional materials, and consequently the inter-surface temperatures given are subject to some variation.

Claims

1. A process for recovering heat from gas turbine exhaust comprising passing the exhaust through a waste heat exchanger (1) having a high pressure steam superheater (2) and a high pressure feedwater heater (3), where the exhaust gas first contacts the high pressure steam superheater (2) and then contacts the high pressure feedwater heater (3) CHARACTERISED IN THAT the exhaust gases contact the feedwater heater (3) directly after contact with the superheater (2), AND IN THAT water exiting the feedwater heater (3) is passed to a steam generator (8) separate from the waste heat exchanger (1), and steam produced in the generator (8) is passed to the superheater (2).

2. A process according to Claim 1 CHARACTERISED IN THAT the exhaust gas temperature at the entrance to the heat exchanger (1) is in the range 482°c to 649°c.

3. A process according to Claim 1 CHARACTERISED IN THAT said high pressure feedwater heater (3) is supplied with water at a temperature in the range 93°c to 260°c and at a pressure in the range 90 to 150 atmospheres.

4. A process according to Claim 3 CHARACTERISED IN THAT the steam produced in the generator (8) is fed to the superheater (2) at a temperature in the range 288°c to 343°c and at a pressure in the range 90 to 150 atmospheres.

5. A process according to Claim 4 CHARACTERISED IN THAT the steam in the superheater (2) is heated to temperatures in the range 427°c to 538°c.

6. A process according to Claim 4 CHARACTERISED IN THAT the waste heat exchanger includes at least one additional heat exchanger (4,5,6) downstream of the feedwater heater (3) in the path of the exhaust gases.

7. A heat recovery system comprising a waste heat exchanger (1) coupled to the exhaust of a gas turbine (7), the waste heat exchanger (1) comprising a high pressure steam superheater (2) and a high pressure feedwater heater (3) CHARACTERISED IN THAT the superheater (2) and the feedwater heater (3) are disposed successively in the path of exhaust gases through the waste heat exchanger (1) such that the exhaust gases contact the feedwater heater (3) directly after contact with the superheater (2), AND IN THAT water exiting the feedwater heater (3) is passed to a steam generator (8) separate from the waste heat exchanger (1), and steam produced in the generator (8) is passed to the superheater (2).

## Revendications

1. Procédé pour récupérer de la chaleur à partir de l'échappement d'une turbine à gaz, consistant à faire passer les gaz d'échappement à travers un échangeur de chaleur de récupération (1) comportant un surchauffeur de vapeur à haute pression (2) et un réchauffeur d'eau d'alimentation à haute pression (3), dans lequel les gaz d'échappement entrent en contact d'abord avec le surchauffeur de vapeur à haute pression (2), puis avec le réchauffeur d'eau d'alimentation à haute pression (3), caractérisé en ce que les gaz d'échappement entrent en contact avec le réchauffeur d'eau d'alimentation (3) directement après être entrés en contact avec le surchauffeur (2), et en ce que de l'eau quittant le réchauffeur d'eau d'alimentation (3) est transmise à un générateur de vapeur (8) distinct de l'échangeur de chaleur de récupération (1) tandis que de la vapeur produite dans le générateur (8) est transmise au surchauffeur (2).

2. Procédé selon la revendication 1, caractérisé en ce que la température des gaz d'échappement à l'entrée de l'échangeur de chaleur (1) est de l'ordre de 482°C à 649°C.

3. Procédé selon la revendication 1, caractérisé en ce que ledit réchauffeur d'eau d'alimentation à haute pression (3) est alimenté en eau à une température de l'ordre de 93°C à 260°C et à une pression de l'ordre de 90 à 150 atmosphères.

4. Procédé selon la revendication 3, caractérisé en ce que la vapeur produite dans le générateur (8) est délivrée au surchauffeur (2) à une température de l'ordre de 288°C à 343°C et à une pression de l'ordre de 90 à 150 atmosphères.

5. Procédé selon la revendication 4, caractérisé en ce que la vapeur dans le surchauffeur (2) est chauffée à des températures de l'ordre de 427°C à 538°C.

6. Procédé selon la revendication 4, caractérisé en ce que l'échangeur de chaleur de récupération comprend au moins un échangeur de chaleur additionnel (4,5,6) en aval du réchauffeur d'eau d'alimentation (3) sur le trajet des gaz d'échappement.

7. Système de récupération de chaleur comprenant un échangeur de chaleur de récupération (1) accouplé avec l'échappement d'une turbine à gaz (7), l'échangeur de chaleur de récupération (1) comprenant un surchauffeur de vapeur à haute pression (2) et un réchauffeur d'eau d'alimentation à haute pression (3), caractérisé en ce que le surchauffeur (2) et le réchauffeur d'eau d'alimentation (3) sont disposés de manière successive sur le trajet des gaz d'échappement à travers l'échangeur de chaleur de récupération (1) de façon que les gaz d'échappement entrent en contact avec le réchauffeur d'eau d'alimentation (3) directement après être entrés en contact avec le surchauffeur (2), et en ce que de l'eau quittant le réchauffeur d'eau d'alimentation (3) est transmise à un générateur de vapeur (8) distinct de l'échangeur de chaleur de récupération (1) tandis que de la vapeur produite dans le générateur (8) est transmise au surchauffeur (2).

**Patentansprüche**

1. Verfahren zur Rückgewinnung von Wärme aus einer Gasturbinenausströmung, umfassend das Leiten der Ausströmung durch einen einen Hochdruck-Dampfüberhitzer (2) und einen Hochdruck-Speisewasserwärmer (3) aufweisenden Abwärmeaustauscher (1), in dem das Ausströmungsgas zuerst den Hochdruck-Dampfüberhitzer (2) kontaktiert und dann den Hochdruck-Speisewasserwärmer (3) kontaktiert, DADURCH GEKENNZEICHNET, DASS die Ausströmungsgase den Speisewasserwärmer (3) direkt nach Kontakt mit dem Überhitzer (2) kontaktieren UND DASS aus dem Speisewasserwärmer (3) austretendes Wasser zu einem vom Abwärmeaustauscher (1) separaten Dampfgenerator (8) geleitet wird und daß im Generator (8) erzeugter Dampf zum Überhitzer (2) geleitet wird.

2. Verfahren nach Anspruch 1, DADURCH GEKENNZEICHNET, DASS die Ausströmungsgastemperatur am Eintritt in den Wärmeaustauscher (1) im Bereich von 482 °C bis 649 °C liegt.

3. Verfahren nach Anspruch 1, DADURCH GEKENNZEICHNET, DASS dem Hochdruck-Speisewasserwärmer (3) Wasser auf einer Temperatur im Bereich von 93 °C bis 260 °C und einem Druck im Bereich von 90 bis 150 Atmosphären zugeführt wird.

4. Verfahren nach Anspruch 3, DADURCH GEKENNZEICHNET, DASS der im Generator (8) erzeugte Dampf auf einer Temperatur im Bereich von 288 °C und 343 °C und einem Druck im Bereich von 90 bis 150 Atmosphären in den Überhitzer (2) eingespeist wird.

5. Verfahren nach Anspruch 4, DADURCH GEKENNZEICHNET, DASS der Dampf im Überhitzer (2) auf Temperaturen im Bereich von 427 °C bis 538 °C erhitzt wird.

6. Verfahren nach Anspruch 4, DADURCH GEKENNZEICHNET, DASS der Abwärmeaustauscher zumindest einen zusätzlichen Wärmeaustauscher (4,5,6) auf der stromabwärtigen Seite des Speisewasserwärmers (3) im Pfad der Ausströmungsgase aufweist.

7. Wärmerückgewinnungssystem, aufweisend einen an die Ausströmung einer Gasturbine (7) angeschalteten Abwärmeaustauscher (1), welcher Abwärmeaustauscher (1) einen Hochdruck-Dampfüberhitzer (2) und einen Hochdruck-Speisewasserwärmer (3) aufweist, DADURCH GEKENNZEICHNET, DASS der Überhitzer (2) und der Speisewasserwärmer (3) derart aufeinanderfolgend im Pfad der Ausströmungsgase durch den Abwärmeaustauscher (1) angeordnet sind, daß die Ausströmungsgase den Speisewasserwärmer (3) unmittelbar nach Kontakt mit dem Überhitzer (2) kontaktieren UND DASS aus dem Speisewasserwärmer (3) austretendes Wasser zu einem vom Abwärmeaustauscher (1) separaten Dampfgenerator (8) geleitet wird und im Generator (8) erzeugter Dampf zum Überhitzer (2) geleitet wird.

# FIG. 1

GAS TURBINE EXHAUST

WASTE HEAT EXCHANGER

# FIG. 2

TO STEAM GENERATOR

GAS TURBINE EXHAUST